# EUROPÄISCHE PATENTSCHRIFT

(11) **EP 3 328 674 B1**
(45) Veröffentlichungstag und Bekanntmachung des Hinweises auf die Patenterteilung: **11.09.2019**
(21) Anmeldenummer: 16736796.0
(22) Anmeldetag: 07.07.2016
(51) Int. Cl.: B60K 26/02, B60W 50/16, G05G 5/03, G05G 1/44

(54) **VERFAHREN ZUM SCHONENDEN BETRIEB EINES AKTUATORS FÜR EINEN KRAFTSTELLER EINES GASPEDALS**
METHOD FOR CAREFUL OPERATION OF AN ACTUATOR FOR A FORCE CONTROLLER OF AN ACCELERATOR PEDAL
PROCÉDÉ PERMETTANT UN FONCTIONNEMENT EN DOUCEUR D'UN ACTIONNEUR D'UN RÉGULATEUR DE FORCE D'UNE PÉDALE D'ACCÉLÉRATEUR

(30) Priorität: 01.08.2015 DE 102015010034
(43) Veröffentlichungstag der Anmeldung: 06.06.2018
(73) Patentinhaber: Audi AG, 85045 Ingolstadt (DE)
(72) Erfinder: LEPCZYK, Daniel, 86529 Schrobenhausen (DE); DIETRICH, Maximilian, 81245 München (DE); MAKHORTOVA, Daria, 93356 Teugn (DE)
(86) Internationale Anmeldenummer: PCT/EP2016/001169
(87) Internationale Veröffentlichungsnummer: WO 2017/020985

(56) Entgegenhaltungen:
- DE-A1-102004 026 407
- DE-A1-102004 026 409
- DE-A1-102007 011 739
- DE-A1-102010 018 753

## Beschreibung

Die vorliegende Erfindung betrifft ein Verfahren zum Betrieb mindestens eines Aktuators für einen Kraftsteller einer Vorrichtung und eine entsprechende Vorrichtung.

Beim Betrieb einer Vorrichtung, wie bspw. eines Fahrzeugs mit verschiedenen Betriebszuständen, kann es vorkommen, dass einem Nutzer eine Rückmeldung an einem Kraftsteller, wie bspw. einem Pedal des Fahrzeugs bereitgestellt werden soll. Zum Bereitstellen einer derartigen Rückmeldung werden in der Regel Aktuatoren verwendet, die mit einer Kraft in einer vorgegebenen Stärke auf den Kraftsteller einwirken und bspw. einer von einem Nutzer aufgebrachten Kraft zum Auslenken des Kraftstellers entgegenwirken. Entsprechend werden starke Kräfte benötigt, die wiederum zu einer hohen Belastung eines jeweiligen Aktuators führen, so dass es vorkommen kann, das der Aktuator aus Bauteilschutzgründen, bspw. zum Schutz vor Überhitzung, abgeschaltet werden muss.

In der deutschen Druckschrift DE 10 2012 108589 A1 wird ein Verfahren zum Betreiben eines Kraftfahrzeugs mit mindestens einer als Verbrennungsmotor ausgebildeten Antriebseinheit vorgestellt, wobei die Antriebseinheit über ein Gaspedal und eine mit dem Gaspedal zusammenwirkende Steuereinheit angesteuert wird, bei dem einem Fahrer durch eine haptische Rückmeldung an dem Gaspedal angezeigt wird, dass in Reaktion auf Erreichen eines Gaspedalwegs, der mit einer bestimmten, an die Steuereinheit übermittelten Leistungsanforderung verbunden ist, eine definierte Aktion eingeleitet und durchgeführt wird, die einen Fahrantriebswechsel bewirkt, wobei die haptische Rückmeldung als ein in einer in der Steuereinheit hinterlegten Kennlinie des Gaspedals ausgehend von dem bestimmten Gaspedalweg definierter Leerweg realisiert wird.

Die deutsche Druckschrift DE 10 2013 010269 A1 betrifft ein Verfahren zum Bereitstellen einer haptischen Rückmeldung zum Aktivieren eines Rückschaltvorgangs bei einem Automatikgetriebe.

Ein Gaspedal mit einem Kick-Down-Schalter ist in der deutschen Druckschrift DE 10 217 050 A1 offenbart.

Vor diesem Hintergrund wird ein Verfahren zum Betrieb mindestens eines Aktuators für einen Kraftsteller einer Vorrichtung vorgestellt, bei dem einem Nutzer der Vorrichtung mittels einer in ihrer Stärke vorgegebenen und durch den mindestens einen Aktuator auf den Kraftsteller einwirkenden Kraft eine haptische Rückmeldung über mindestens einen Betriebszustand der Vorrichtung bereitgestellt wird, wenn der Kraftsteller durch den Nutzer an mindestens einen vorgegebenen Punkt auf einer Bewegungsbahn des Kraftstellers gebracht wird, und wobei der mindestens eine Aktuator derart gesteuert wird, dass sobald der Nutzer den Kraftsteller für eine vorgegebene Zeitspanne an den mindestens einen vorgegebenen Punkt auf der Bewegungsbahn des Kraftstellers auslenkt und/oder an diesem Punkt hält, die Stärke der durch den mindestens einen Aktuator auf den Kraftsteller einwirkenden Kraft nach einer weiteren vorgegebenen Zeitspanne reduziert wird.

Ausgestaltungen ergeben sich aus der Beschreibung und den abhängigen Ansprüchen.

Unter der Formulierung "an den mindestens einen vorgegebenen Punkt auf der Bewegungsbahn des Kraftstellers auslenkt und/oder an diesem Punkt hält" ist auch ein Bewegen in einen bzw. ein Halten in einem unmittelbar zu dem Punkt benachbarten Bereich zu verstehen. Dieser unmittelbar benachbarte Bereich ist durch einen Verlauf der durch den Aktuator auf den Kraftsteller einwirkenden Kraft definiert.

Das vorgestellte Verfahren dient insbesondere zum sicheren und schonenden Betrieb eines Aktuators zum Bereitstellen einer haptischen Rückmeldung an einem Kraftsteller einer Vorrichtung, wie bspw. einem Hybridfahrzeug.

Um einem Nutzer eines Hybridfahrzeugs einen bestimmten Betriebszustand, wie bspw. ein Zuschalten eines Verbrennungsmotors zu einem elektrischen Antrieb anzuzeigen, ist vorgesehen, dass dem Nutzer eine haptische Rückmeldung, bspw. in Form eines Druckpunkts, d. h. einer Kraft, die einer von einem Nutzer auf den Kraftsteller einwirkenden Kraft entgegensteht, über einen Aktuator bereitgestellt wird. Da eine derartige Rückmeldung starke Kräfte erfordert, die den Aktuator entsprechend stark fordern und erwärmen, ist erfindungsgemäß vorgesehen, dass die Stärke der von dem Aktuator erzeugten und auf den Kraftsteller einwirkenden Kraft nach einer vorgegebenen Zeitspanne reduziert wird, falls der Kraftsteller durch den Nutzer an mindestens einen vorgegebenen Punkt auf einer Bewegungsbahn des Kraftstellers gebracht wird bzw. der Kraftsteller durch den Nutzer in einem vorgegebenen Bereich auf der Bewegungsbahn des Kraftstellers gehalten wird.

Unter einem Kraftsteller ist im Kontext der vorliegenden Erfindung jede technische Vorrichtung zum Einstellen einer Kraft an einer Vorrichtung, insbesondere ein Pedal, zu verstehen.

Es hat sich gezeigt, dass ein jeweiliger Nutzer eine haptische Rückmeldung zum Auffinden und Halten eines Punkts auf der Bewegungsbahn eines jeweiligen Kraftstellers nicht konstant benötigt. Entsprechend ist es ausreichend, die haptische Rückmeldung lediglich zur Orientierung für den Nutzer auf der Bewegungsbahn bereitzustellen und sobald eine jeweilige von dem Nutzer gewünschte Position auf der Bewegungsbahn, d. h. eine für einen jeweiligen gewünschten Betriebszustand charakteristische Position auf der Bewegungsbahn, gefunden wurde, den zum Bereitstellen der haptischen Rückmeldung verwendeten Aktuator zu deaktivieren bzw. die von dem Aktuator zu erzeugende Kraft, insbesondere eine Dauerkraft, zu reduzieren. Durch Reduktion der von dem Aktuator erzeugten Kraft wird eine Erwärmung des Aktuators gestoppt und eine Notabschaltung aus bspw. Bauteilschutzgründen verhindert.

In einer möglichen Ausgestaltung des vorgestellten Verfahrens ist vorgesehen, dass für den Fall, dass die Stärke der durch den mindestens einen Aktuator auf den Kraftsteller einwirkenden Kraft reduziert wird, der für die Rückmeldung vorgegebene Punkt auf der Bewegungsbahn des Kraftstellers in Auslenkrichtung verschoben wird, so dass dem Nutzer bei einem Verschieben des Kraftstellers auf den in Auslenkrichtung verschobenen vorgegebenen Punkt erneut eine Rückmeldung mittels des mindestens einen Aktuators und einer Kraft in der vorgegebenen Stärke bereitgestellt und im weiteren Verlauf ggf. reduziert wird.

Um eine von einem jeweiligen Aktuator bereitzustellende Kraft zu reduzieren und den Aktuator dadurch zu schonen, kann vorgesehen sein, dass ein vorgegebener Punkt auf der Bewegungsbahn eines Kraftstellers an dem der Aktuator die Kraft bereitzustellen hat, geringfügig, d. h. bspw. um wenige Prozent einer Strecke der Bewegungsbahn in Auslenkrichtung verschoben wird, sobald ein jeweiliger Nutzer den Kraftsteller in einem vorgegebenen Bereich bzw. an dem vorgegebenen Punkt für eine vorgegebene Zeitspanne hält. Durch das Verschieben des vorgegebenen Punkts in Auslenkrichtung wird ein Befehl zum Aktivieren des Aktuators mit dem vorgegebenen Punkt mitverschoben. Dies bedeutet, dass der Aktuator zunächst an dem vorgegebenen Punkt aktiviert wird, um dem Nutzer eine Rückmeldung bereitzustellen, so dass der Nutzer den vorgegebenen Punkt findet. Im weiteren Betrieb einer entsprechenden Vorrichtung wird der Aktuator deaktiviert, da sich die Position zum Aktivieren des Aktuators gemäß dem vorgegebenen Punkt bspw. relativ zu einer aktuellen Position des Kraftstellers verschiebt.

Wird der vorgegebene Punkt, an dem die haptische Rückmeldung durch den Aktuator bereitzustellen ist, in Auslenkrichtung eines Pedals, d. h. eines Kraftstellers, verschoben, so wird zum einen der Aktuator deaktiviert bzw. eine von dem Aktuator aufzubringende Kraft reduziert, wodurch der Aktuator geschont wird. Zum anderen wird dem Nutzer bei einem Verfahren bzw. Verschwenken des Kraftstellers aus dem vorgegebenen Bereich bzw. über einen entsprechend verschobenen bzw. geänderten vorgegebenen Punkt hinaus, erneut eine Rückmeldung durch den Aktuator bereitgestellt. Entsprechend wird dem Nutzer eine Möglichkeit zum Auffinden einer für einen jeweiligen Betriebszustand einer jeweiligen Vorrichtung charakteristischen Punkt auf einer Bewegungsbahn eines Kraftstellers bereitgestellt und der Aktuator zum Bereitstellen einer haptischen Rückmeldung an dem Kraftsteller nur geringfügig bzw. zeitweise belastet.

In einer weiteren möglichen Ausgestaltung des vorgestellten Verfahrens ist vorgesehen, dass die Zeitspanne, für die der Nutzer den Kraftsteller an den mindestens einen vorgegebenen Punkt der Bewegungsbahn des Kraftstellers zu bringen hat und/oder die weitere Zeitspanne, nach der die Stärke der auf den Kraftsteller einwirkenden Kraft reduziert wird und/oder eine Strecke, um die der vorgegebene Punkt auf der Bewegungsbahn des Kraftstellers in Auslenkrichtung verschoben wird, dynamisch in Abhängigkeit eines Betriebsparameters der Vorrichtung gewählt wird.

Insbesondere ist vorgesehen, dass das Verschieben des vorgegebenen Punkts bzw. Bereichs und/oder das Deaktivieren des Aktuators in Abhängigkeit frei parametrierbarer Größen der Zeitspanne, für die der Nutzer den Kraftsteller an den mindestens einen vorgegebenen Punkt der Bewegungsbahn des Kraftstellers zu bringen hat, oder der weiteren Zeitspanne, nach der die Stärke der auf den Kraftsteller einwirkenden Kraft reduziert wird, oder der Strecke, um die der vorgegebene Punkt auf der Bewegungsbahn des Kraftstellers in Auslenkrichtung verschoben wird, erfolgt. Dies bedeutet, dass die voranstehend benannten Größen beliebig vorgegeben bzw. dynamisch an bspw. einen Betriebszustand einer jeweiligen Vorrichtung angepasst werden können und bspw. dem Nutzer eine an einen aktuellen Betriebszustand oder ein aktuelles Bedienverhalten angepasste Rückmeldung bereitstellen. So kann bspw. vorgesehen sein, dass der Aktuator in Abhängigkeit eines Verstellungs- ,d. h. Verschwenkmusters, des Kraftstellers aktiviert bzw. deaktiviert wird.

In einer weiteren möglichen Ausgestaltung des vorgestellten Verfahrens ist vorgesehen, dass die Stärke der durch den mindestens einen Aktuator auf den Kraftsteller einwirkenden Kraft gemäß einem vorgegebenen Verlaufsgradienten reduziert wird.

Um einem jeweiligen Nutzer ein Halten einer durch eine haptische Rückmeldung aufgefundenen Position auf einer Bewegungsbahn eines Kraftstellers zu ermöglichen, ist vorgesehen, dass die Stärke einer durch einen jeweiligen Aktuator für die haptische Rückmeldung aufzubringenden Kraft graduell, d. h. gemäß einem vorgegebenen Gradienten reduziert wird. Durch eine graduelle Reduktion der haptischen Rückmeldung bzw. der die haptische Rückmeldung bedingenden Kraft wird der Nutzer langsam an einen Zustand ohne die haptische Rückmeldung herangeführt, so dass die haptische Rückmeldung bzw. der entsprechende Aktuator ggf. von dem Nutzer unbemerkt deaktiviert werden kann.

Das vorgestellte Verfahren eignet sich ferner zur Planung von Vorrichtungen, bei denen nur bestimmte Aktuatoren mit bspw. geringen Abmaßen verbaut werden sollen. Aufgrund des schonenden Betriebs gemäß dem vorgestellten Verfahren können auch verhältnismäßig kleine Aktuatoren zum Bereitstellen einer jeweils benötigten Kraft verwendet werden. Weiterhin ermöglicht das vorgestellte Verfahren eine Anordnung von Aktuatoren in thermisch kritischen Verbausituationen sowie eine kostengünstige Konstruktion entsprechender Vorrichtungen.

In einer weiteren möglichen Ausgestaltung des vorgestellten Verfahrens ist vorgesehen, dass ein jeweiliger Verlaufsgradient zur Reduktion der von dem mindestens einen Aktuator bereitgestellten Kraft in Abhängigkeit der durch den Nutzer auf den Kraftsteller einwirkenden Kraft gewählt wird.

Zur Abstimmung auf einen jeweiligen Nutzer, d. h. um dem Nutzer eine personalisierte haptische Rückmeldung bereitzustellen, deren Deaktivierung gemäß dem vorgestellten Verfahren von dem Nutzer möglichst unbemerkt bleibt, kann ein Verlaufsgardient zur Reduktion der von einem jeweiligen Aktuator bereitgestellten Kraft an eine von dem Nutzer bereitgestellte Kraft, d. h. eine durch den Nutzer auf einen jeweiligen Kraftsteller einwirkende Kraft, angepasst werden. Dies bedeutet, dass bspw. bei einem ruckartigen Kraftverlauf der durch den Nutzer auf den Kraftsteller einwirkenden Kraft, die durch den Aktuator bereitgestellte Kraft ebenfalls ruckartig, d. h. schnell ansteigend bereitgestellt und danach ebenfalls schnell abgebaut wird, wohingegen bei einem konstanten Kraftaufbau durch den Nutzer die Reduktion der durch den Aktuator aufgebrachten Kraft entsprechend langsam und kontinuierlich erfolgt.

In einer weiteren möglichen Ausgestaltung des vorgestellten Verfahrens ist vorgesehen, dass ein Steuergerät der Vorrichtung einen zum Betrieb des mindestens einen Aktuators verwendeten elektrischen Strom reduziert, um die Stärke der durch den mindestens einen Aktuator auf den Kraftsteller einwirkenden Kraft zu reduzieren.

Steuergeräte, wie bspw. ein Motor- oder Zentralsteuergerät eines Fahrzeugs, eignen sich zur Kontrolle von elektrischen Strömen, die jeweiligen Aktuatoren zugeführt werden. Entsprechend ist vorgesehen, ein Steuergerät derart zu konfigurieren, dass einem Aktuator ein elektrischer Strom bereitgestellt wird, der einen Kraftverlauf gemäß dem vorgestellten Verfahren bedingt.

In einer weiteren möglichen Ausgestaltung des vorgestellten Verfahrens ist vorgesehen, dass die Stärke der durch den mindestens einen Aktuator auf den Kraftsteller einwirkenden Kraft nach einer weiteren vorgegebenen Zeitspanne reduziert wird, wenn der Kraftsteller durch den Nutzer an einem Punkt auf der Bewegungsbahn des Kraftstellers gehalten wird, der vor dem Punkt liegt, an dem dem Nutzer die haptische Rückmeldung an dem Kraftsteller bereitgestellt wird.

Selbstverständlich eignet sich das vorgestellte Verfahren auch zum Betrieb eines Aktuators für den Fall, dass ein jeweiliger Nutzer einen Kraftsteller kurz vor einem jeweiligen vorgegebenen Punkt hält, an dem eine Rückmeldung bereitzustellen ist, so dass dem Nutzer lediglich bei einem Überschreiten einer aktuellen Fixationsstellung des Kraftstellers eine haptische Rückmeldung bereitgestellt wird und eine Dauerbelastung des Aktuators vermieden wird. Belastungen des Aktuators durch bspw. einen Stand-by-Betrieb werden so vermieden.

In einer weiteren möglichen Ausgestaltung des vorgestellten Verfahrens ist vorgesehen, dass die Reduktion der Stärke der durch den mindestens einen Aktuator auf den Kraftsteller einwirkenden Kraft in Abhängigkeit eines Bewegungsprofils des Kraftstellers erfolgt.

Es ist weiterhin denkbar, dass die Reduktion der durch einen jeweiligen Aktuator bereitzustellenden Kraft in bestimmten Situationen dynamisch angepasst wird. Insbesondere bei unruhigen Bewegungsprofilen, bei denen ein Fahrer konstante Stellungen eines jeweiligen Kraftstellers vermeidet, wie bspw. bei Fahrten im Stadtverkehr, kann vorgesehen sein, dass die Reduktion der durch den Aktuator bereitzustellenden Kraft nicht oder nur in reduziertem Umfang erfolgt, so dass bspw. die haptische Rückmeldung weniger stark ausfällt.

In einer weiteren möglichen Ausgestaltung des vorgestellten Verfahrens ist vorgesehen, dass die Reduktion der Stärke der durch den mindestens einen Aktuator auf den Kraftsteller einwirkenden Kraft in Abhängigkeit mindestens einer äußeren Bedingung der folgenden Liste an äußeren Bedingungen erfolgt: Umgebungstemperatur des mindestens einen Aktuators, Luftfeuchtigkeit in einer Umgebung des mindestens einen Aktuators und Ladezustand eines den mindestens einen Aktuator mit elektrischer Energie versorgenden Energiespeichers.

Um eine Überhitzung bzw. eine temperaturbedingte Notabschaltung eines jeweiligen Aktuators zu verhindern, kann es vorteilhaft sein, wenn bei einer Berechnung zum Festlegen jeweiliger Parameter zum Reduzieren einer von einem jeweiligen Aktuator zu erzeugenden Kraft, wie bspw. einer Zeitspanne oder einer Strecke zum Verschieben eines vorgegebenen Punkts, äußere Bedingungen, d. h. bspw. Umweltbedingungen wie eine Umgebungstemperatur, einbezogen werden. Entsprechend ist denkbar, dass eine von einem jeweiligen Aktuator zu erzeugende Kraft bei hohen Umgebungstemperaturen früher und bei niedrigen Umgebungstemperaturen später reduziert wird.

Ferner betrifft die vorgestellte Erfindung eine Vorrichtung mit mindestens einem Aktuator, einem Kraftsteller und einem Steuergerät, wobei das Steuergerät dazu konfiguriert ist, einem Nutzer der Vorrichtung mittels einer in ihrer Stärke vorgegebenen und durch den mindestens einen Aktuator auf den Kraftsteller einwirkenden Kraft eine haptische Rückmeldung über mindestens einen Betriebszustand der Vorrichtung bereitzustellen, wenn der Kraftsteller durch den Nutzer an mindestens einen vorgegebenen Punkt auf einer Bewegungsbahn des Kraftstellers gebracht wird, und wobei das Steuergerät ferner dazu konfiguriert ist, den mindestens einen Aktuator derart anzusteuern, dass sobald der Nutzer den Kraftsteller für eine vorgegebene Zeitspanne an den mindestens einen vorgegebenen Punkt auf der Bewegungsbahn des Kraftstellers auslenkt und/oder an diesem Punkt hält, die Stärke der durch den mindestens einen Aktuator auf den Kraftsteller einwirkenden Kraft nach einer weiteren vorgegebenen Zeitspanne zu reduzieren ist, um den mindestens einen Aktuator zu schonen.

Die vorgestellte Vorrichtung dient insbesondere zur Durchführung des vorgestellten Verfahrens.

Weitere Vorteile und Ausgestaltungen der Erfindung ergeben sich aus der Beschreibung und den beiliegenden Zeichnungen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt eine schematische Darstellung einer möglichen Ausgestaltung des vorgestellten Verfahrens.
Figur 2 zeigt eine schematische Darstellung von verschiedenen Temperaturverläufen beim Betrieb eines Aktuators gemäß dem Stand der Technik und beim Betrieb einer möglichen Ausgestaltung des vorgestellten Verfahrens.

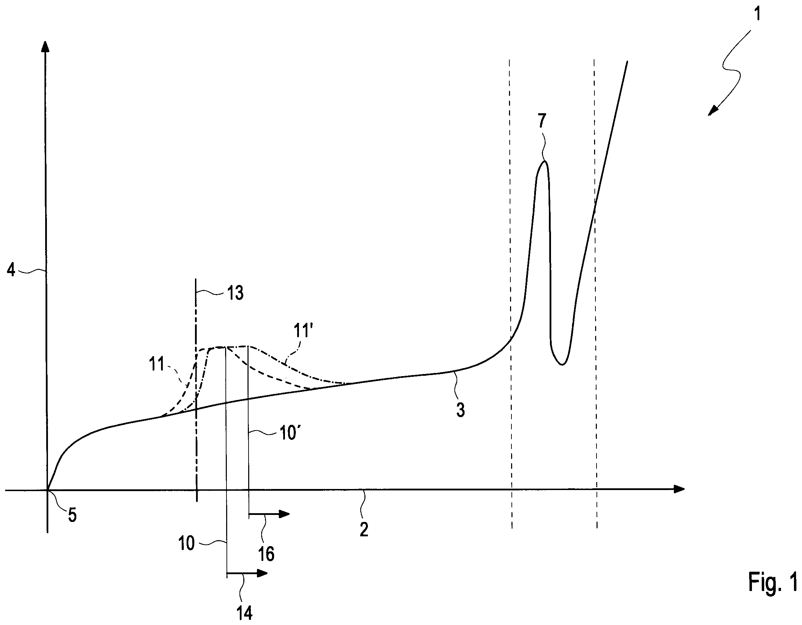

In Figur 1 ist ein Diagramm 1 dargestellt, das sich auf der Abszisse 2 über einen Weg in [cm] und auf der Ordinate 4 über eine Kraft in [N] aufspannt. Ein Verlauf 3 zeigt eine Kraft, die von einem Nutzer aufgewendet werden muss, um ein Pedal entlang seiner Bewegungsbahn von einer Ruhestellung 5 in eine Kickdownposition 7, die eine finale Getriebestufe schaltet, zu verschieben.

Beim Verschieben des Pedals entlang des Verlaufs 3 findet der Nutzer an einem vorgegebenen Punkt, an dem bspw. ein Verbrennungsmotor zu einem elektrischen Antrieb zugeschaltet wird, eine haptische Rückmeldung in Form eines Druckpunkts 10, der durch einen Aktuator erzeugt wird, der das Pedal mit einer Kraft beaufschlagt, die einer von dem Nutzer aufgebrachten Kraft zum Verschieben des Pedals entgegenwirkt, wie durch einen Kraftverlauf 11 dargestellt. Der Druckpunkt 10 stellt dem Nutzer eine Entscheidungsmöglichkeit bereit, ob er das Pedal über den Druckpunkt 10 verschieben, wie durch Pfeil 14 angedeutet, und den Verbrennungsmotor zuschalten oder das Pedal vor dem Druckpunkt 10 halten und lediglich den elektrischen Antrieb nutzen möchte.

Möchte der Nutzer lediglich den elektrischen Antrieb nutzen, muss das Pedal vor bzw. auf dem Druckpunkt 10 gehalten werden, um ein Zuschalten des Verbrennungsmotors zu verhindern. Dies bedeutet, dass das Pedal von dem Nutzer konstant in einem Bereich 13 auf dem Verlauf 3 gehalten wird, der in unmittelbarer Nähe zu oder direkt auf dem Druckpunkt 10 liegen kann. Dabei ist der Aktuator zum Bereitstellen der für den Druckpunkt 10 benötigten Kraft in dem Bereich 13 konstant aktiv, wie durch eine Schnittstelle des Bereichs 13 mit dem Kraftverlauf 11 angedeutet, wodurch er ggf. nach einer gewissen Zeit überhitzt.

Um den Aktuator vor einem Überhitzen zu schützen, ist erfindungsgemäß vorgesehen, dass wenn der Nutzer das Pedal für eine vorgegebene Zeitpanne, wie bspw. wenige Sekunden, in dem Bereich 13 hält, der Druckpunkt 10 entlang des Verlaufs 3 in Richtung Kickdownposition 7 verschoben wird, wie durch einen verschobenen Druckpunk 10' angedeutet. Dies bedeutet, dass der Druckpunkt 10' sich von dem Bereich 13, in dem das Pedal von dem Nutzer gehalten wird, entfernt und der Aktuator keine oder nur noch eine geringe Kraft aufwenden muss, wie durch eine Schnittstelle des Bereichs 13 mit einem entsprechend verschobenen Kraftverlauf 11' zum Bereitstellen des verschobenen Druckpunkts 10' angedeutet. Während die Schnittstelle des Bereichs 13 den Kraftverlauf 11 nahe einem Gipfelpunkt des Krafterlaufs 11 schneidet, schneidet der Bereich 13 den verschobenen Kraftverlauf 11' bei einem niedrigen Kraftniveau nahe seines Ursprungs.

Entsprechend wird von dem Aktuator durch den verschobenen Kraftverlauf 11' in dem Bereich 13 weniger Kraft gefordert als durch den Kraftverlauf 11.

Sollte der Nutzer das Pedal ausgehend von dem ursprünglichen Druckpunkt 10 in Richtung Kickdownposition 7 auslenken, trifft er auf den verschobenen Druckpunkt 10' und nimmt eine haptische Rückkopplung gemäß Kraftverlauf 11' wahr. Da eine Funktion zum Aktivieren des Verbrennungsmotors stets an einem aktuellen Druckpunkt bereitzustellen ist und entsprechend zu dem verschobenen Druckpunkt 10' verlagert wurde, wird dem Nutzer die Entscheidungsmöglichkeit zwischen einem rein elektrischen Antrieb und einer Aktivierung einer Funktion zum Zuschalten des Verbrennungsmotors erneut an dem verschobenen Druckpunkt 10' bereitgestellt, wie durch Pfeil 16, der ein Zuschalten des Verbrennungsmotors andeutet, dargestellt, so dass der Nutzer durch das Verschieben des Druckpunkts 10 auf Druckpunkt 10' nicht in seiner Entscheidungsmöglichkeit eingeengt wird. Durch erneutes Verschieben des verschobenen Druckpunkts 10' kann der Aktuator ggf. erneut geschont werden. Entsprechend ist vorgesehen, dass eine Distanz zwischen dem Druckpunkt 10 und dem verschobenen Druckpunkt 10' und ggf. weiteren verschobenen Druckpunkten möglichst klein gewählt wird.

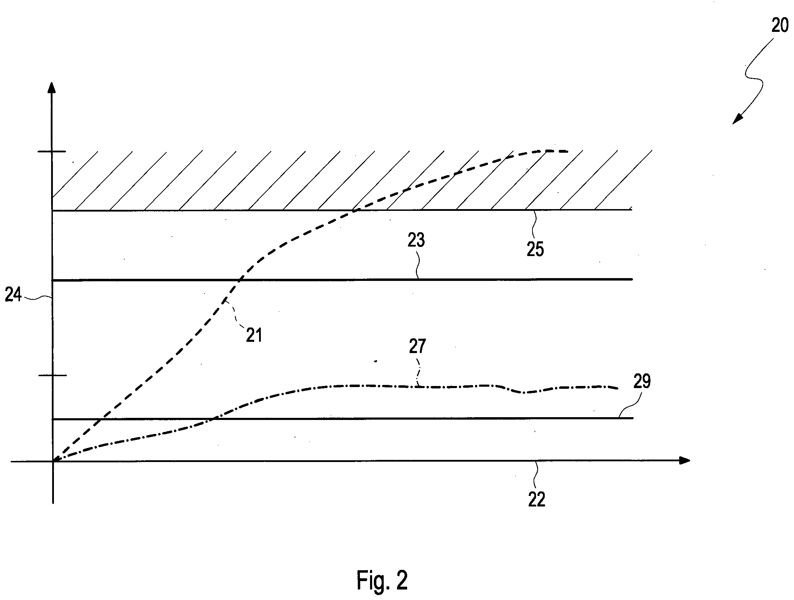

In Figur 2 ist ein Diagramm 20 dargestellt, das auf der Abszisse 22 eine vergangene Zeit in [s] und auf der Ordinate 24 sowohl eine Betriebstemperatur eines Aktuators in [°C] als auch eine an dem Aktuator anliegende Stromstärke in [A] abbildet. Ein Temperaturverlauf 21 zeigt ein Verhalten des Aktuators bei einer konstanten, d. h. dauerhaften Bereitstellung eines Druckpunkts, wie es im Stand der Technik üblich ist. Sobald ein Nutzer ein Pedal im Bereich eines Druckpunkts hält, wird der Aktuator konstant mit einem Strom gemäß Stromverlauf 23 versorgt, so dass der Aktuator eine konstante Kraft erzeugt und den Druckpunkt konstant an den Nutzer rückmeldet. Hält der Nutzer das Pedal für längere Zeit auf dem Druckpunkt erwärmt sich der Aktuator kontinuierlich, wie durch den Temperaturverlauf 21 angedeutet und wird bei einem Überschreiten einer Grenztemperatur 25 aus Bauteilschutzgründen deaktiviert.

Der Temperaturverlauf 27 zeigt hingegen einen Verlauf einer Erwärmung eines Aktuators, der gemäß dem vorgestellten Verfahren betrieben wird. Sobald der Nutzer das Pedal im Bereich des Druckpunkts hält, wird der Druckpunkt verschoben, so dass der Aktuator nur noch mit einer geringen Stromstärke gemäß Stromverlauf 29 versorgt wird. Entsprechend erwärmt sich der Aktuator gegenüber dem Temperaturverlauf 21 signifikant weniger, so dass ein Abschalten des Aktautors aus Bauteilschutzgründen vermieden werden kann. Selbstverständlich ist auch denkbar, den Stromverlauf 29 nach einer vorgegebenen Zeitspanne herunterzufahren, um den Aktuator zu deaktivieren.

## Patentansprüche

1. Verfahren zum Betrieb mindestens eines Aktuators für einen Kraftsteller einer Vorrichtung, bei dem einem Nutzer der Vorrichtung mittels einer in ihrer Stärke vorgegebenen und durch den mindestens einen Aktuator auf den Kraftsteller einwirkenden Kraft eine haptische Rückmeldung über mindestens einen Betriebszustand der Vorrichtung bereitgestellt wird, wenn der Kraftsteller durch den Nutzer an mindestens einen vorgegebenen Punkt auf einer Bewegungsbahn des Kraftstellers gebracht wird, und wobei der mindestens eine Aktuator derart gesteuert wird, dass sobald der Nutzer den Kraftsteller für eine vorgegebene Zeitspanne an den mindestens einen vorgegebenen Punkt auf der Bewegungsbahn des Kraftstellers auslenkt und/oder an diesem Punkt hält, die Stärke der durch den mindestens einen Aktuator auf den Kraftsteller einwirkenden Kraft nach einer weiteren vorgegebenen Zeitspanne reduziert wird.

2. Verfahren nach Anspruch 1, wobei für den Fall, dass die Stärke der durch den mindestens einen Aktuator auf den Kraftsteller einwirkenden Kraft reduziert wird, der für die Rückmeldung vorgegebene Punkt auf der Bewegungsbahn des Kraftstellers in Auslenkrichtung verschoben wird, so dass dem Nutzer bei einem Verschieben des Kraftstellers auf den in Auslenkrichtung verschobenen vorgegebenen Punkt erneut eine Rückmeldung mittels des mindestens einen Aktuators und einer Kraft in der vorgegebenen Stärke bereitgestellt wird.

3. Verfahren nach Anspruch 2, wobei die Zeitspanne, für die der Nutzer den Kraftsteller an den mindestens einen vorgegebenen Punkt der Bewegungsbahn des Kraftstellers zu bringen hat und/oder die weitere Zeitspanne, nach der die Stärke der auf den Kraftsteller einwirkenden Kraft reduziert wird und/oder eine Strecke, um die der vorgegebene Punkt auf der Bewegungsbahn des Kraftstellers in Auslenkrichtung verschoben wird, dynamisch in Abhängigkeit eines Betriebsparameters der Vorrichtung gewählt wird.

4. Verfahren nach einem der voranstehenden Ansprüche, wobei die Stärke der durch den mindestens einen Aktuator auf den Kraftsteller einwirkenden Kraft gemäß einem vorgegebenen Verlaufsgradienten reduziert wird.

5. Verfahren nach Anspruch 4, wobei der Verlaufsgradient in Abhängigkeit der durch den Nutzer auf den Kraftsteller einwirkenden Kraft gewählt wird.

6. Verfahren nach einem der voranstehenden Ansprüche, wobei ein Steuergerät der Vorrichtung einen zum Betrieb des mindestens einen Aktuators verwendeten elektrischen Strom reduziert, um die Stärke der durch den mindestens einen Aktuator auf den Kraftsteller einwirkenden Kraft zu reduzieren.

7. Verfahren nach einem der voranstehenden Ansprüche, wobei die Stärke der durch den mindestens einen Aktuator auf den Kraftsteller einwirkenden Kraft nach einer weiteren vorgegebenen Zeitspanne reduziert wird, wenn der Kraftsteller durch den Nutzer an einem Punkt auf der Bewegungsbahn des Kraftstellers gehalten wird, der vor dem Punkt liegt, an dem dem Nutzer die haptische Rückmeldung an dem Kraftsteller bereitgestellt wird.

8. Verfahren nach einem der voranstehenden Ansprüche, wobei die Reduktion der Stärke der durch den mindestens einen Aktuator auf den Kraftsteller einwirkenden Kraft in Abhängigkeit eines Bewegungsprofils des Kraftstellers erfolgt.

9. Verfahren nach einem der voranstehenden Ansprüche, wobei die Reduktion der Stärke der durch den mindestens einen Aktuator auf den Kraftsteller einwirkenden Kraft in Abhängigkeit mindestens einer äußeren Bedingung der folgenden Liste an äußeren Bedingungen erfolgt: Umgebungstemperatur des mindestens einen Aktuators, Luftfeuchtigkeit in einer Umgebung des mindestens einen Aktuators und Ladezustand eines den mindestens einen Aktuator mit elektrischer Energie versorgenden Energiespeichers.

10. Vorrichtung mit mindestens einem Aktuator, einem Kraftsteller und einem Steuergerät, wobei das Steuergerät dazu konfiguriert ist, einem Nutzer der Vorrichtung mittels einer in ihrer Stärke vorgegebenen und durch den mindestens einen Aktuator auf den Kraftsteller einwirkenden Kraft eine haptische Rückmeldung über mindestens einen Betriebszustand der Vorrichtung bereitzustellen, wenn der Kraftsteller durch den Nutzer an mindestens einen vorgegebenen Punkt auf einer Bewegungsbahn des Kraftstellers gebracht wird, und wobei das Steuergerät ferner dazu konfiguriert ist, den mindestens einen Aktuator derart anzusteuern, dass, sobald der Nutzer den Kraftsteller für eine vorgegebene Zeitspanne an den mindestens einen vorgegebenen Punkt auf der Bewegungsbahn des Kraftstellers auslenkt und/oder an diesem Punkt hält, die Stärke der durch den mindestens einen Aktuator auf den Kraftsteller einwirkenden Kraft nach einer weiteren vorgegebenen Zeitspanne reduziert wird.

## Claims

1. Method for operating at least one actuator for a force controller of a device, with which a haptic feedback is provided to a user of the device, by means of a force predetermined in its strength and applied by the at least one actuator onto the force controller, concerning at least one operational state of the device, when the force controller is brought by the user to at least one predetermined point on a movement path of the force controller, and wherein the at least one actuator is controlled such that as soon as the user deflects the force controller for a predetermined time duration to the at least one predetermined point on the movement path of the force controller and/or keeps it at this point, the strength of the force applied by the at least one actuator onto the force controller is reduced after a further predetermined time duration.

2. Method according to claim 1, wherein in the case that the strength of the force applied by the at least one actuator onto the force controller is reduced, the point on the movement path of the force controller predetermined for the feedback is displaced in deflection direction, such that again a feedback is provided for the user, when the force controller is displaced onto the predetermined point displaced in deflection direction, by means of the at least one actuator and a force in the predetermined strength.

3. Method according to claim 2, wherein the time duration for which the user has to bring the force controller to the at least one predetermined point in the movement path of the force controller and/or the further time duration after which the strength of the force acting upon the force controller is reduced and/or a distance by which the predetermined point on the movement path of the force controller is displaced in deflection direction, is selected dynamically on the basis of an operational parameter of the device.

4. Method according to any of the preceding claims, wherein the strength of the force applied by the at least one actuator onto the force controller is reduced according to a predetermined course gradient.

5. Method according to claim 4, wherein the course gradient is selected depending on the force applied by the user onto the force controller.

6. Method according to any of the preceding claims, wherein a control device of the device reduces an electrical current used to operate the at least one actuator, in order to reduce the strength of the force applied by the at least one actuator onto the force controller.

7. Method according to any of the preceding claims, wherein the strength of the force applied by the at least one actuator onto the force controller is reduced after a further predetermined time duration, when the force controller is kept by the user at a point on the movement path of the force controller which is situated before the point at which the haptic feedback is provided to the user on the force controller.

8. Method according to any of the preceding claims, wherein the reduction in the strength of the force applied by the at least one actuator onto the force controller is carried out depending on a movement profile of the force controller.

9. Method according to any of the preceding claims, wherein the reduction in the strength of the force applied by the at least one actuator onto the force controller is carried out depending on at least one external condition from the following list of external conditions: environmental temperature of the at least one actuator, air humidity in an environment of the at least one actuator and charging state of an energy storage supplying the at least one actuator with electrical energy.

10. Device having at least one actuator, one force controller and one control device, wherein the control device is configured to provide to a user of the device, by means of a force predetermined in its strength and applied by the at least one actuator onto the force controller, a haptic feedback concerning at least one operational state of the device, when the force controller is brought by the user to at least one predetermined point on a movement path of the force controller, and wherein the control device is further configured to control the at least one actuator such that as soon as the user deflects the force controller for a predetermined time duration to the at least one predetermined point on the movement path of the force controller and/or keeps it at this point, the strength of the force being applied by the at least one actuator onto the force controller is reduced after a further predetermined time duration.

## Revendications

1. Procédé de fonctionnement d'au moins un actionneur d'un régulateur de force d'un dispositif, dans lequel un retour haptique sur au moins un état de fonctionnement du dispositif est mis à disposition d'un utilisateur du dispositif au moyen d'une force à puissance prédéfinie et agissant par l'au moins un actionneur sur le régulateur de force, lorsque le régulateur'de force est amené par l'utilisateur à au moins un point prédéfini sur une trajectoire du régulateur de force, et dans lequel l'au moins un actionneur est commandé de sorte que dès que l'utilisateur dévie le régulateur de force pour un laps de temps prédéfini à l'au moins un point prédéfini sur la trajectoire du régulateur de force et/ou le maintient à ce point, la puissance de la force agissant par l'au moins un actionneur sur le régulateur de force est réduite après un autre laps de temps prédéfini.

2. Procédé selon la revendication 1, dans lequel dans le cas où la puissance de la force agissant par l'au moins un actionneur sur le régulateur de force est réduite, le point prédéfini pour le retour est déplacé sur la trajectoire du régulateur de force dans la direction de déviation de sorte que lors d'un déplacement du régulateur de force sur le point prédéfini déplacé dans la direction de déviation un retour est à nouveau mis à disposition de l'utilisateur au moyen de l'au moins un actionneur et d'une force de puissance prédéfinie.

3. Procédé selon la revendication 2, dans lequel le laps de temps, pour lequel l'utilisateur doit amener le régulateur de force à l'au moins un point prédéfini de la trajectoire du régulateur de force et/ou l'autre laps de temps après lequel la puissance de la force agissant sur le régulateur de force est réduite et/ou une distance de laquelle le point préfini est déplacé sur la trajectoire du régulateur de force dans la direction de déviation est sélectionné dynamiquement en fonction d'un paramètre de fonctionnement du dispositif.

4. Procédé selon l'une quelconque des revendications précédentes, dans lequel la puissance de la force agissant par l'au moins un actionneur sur le régulateur de force est réduite en fonction d'un gradient d'allure prédéfini.

5. Procédé selon la revendication 4, dans lequel le gradient d'allure est sélectionné en fonction de la force agissant par l'utilisateur sur le régulateur de force.

6. Procédé selon l'une quelconque des revendications précédentes, dans lequel un appareil de commande du dispositif réduit un courant électrique utilisé pour le fonctionnement de l'au moins un actionneur pour réduire la puissance de la force agissant par l'au moins un actionneur sur le régulateur de force.

7. Procédé selon l'une quelconque des revendications précédentes, dans lequel la puissance de la force agissant par l'au moins un actionneur sur le régulateur de force est réduite après un autre laps de temps prédéfini, lorsque le régulateur de force est maintenu par l'utilisateur à un point sur la trajectoire du régulateur de force, qui se trouve avant le point au niveau duquel le message haptique est mis à disposition de l'utilisateur au niveau du régulateur de force.

8. Procédé selon l'une quelconque des revendications précédentes, dans lequel la réduction de la puissance de la force agissant par l'au moins un actionneur sur le régulateur de force a lieu en fonction d'un profil de déplacement du régulateur de force.

9. Procédé selon l'une quelconque des revendications précédentes, dans lequel la réduction de la puissance de la force agissant par l'au moins un actionneur sur le régulateur de force a lieu en fonction d'au moins une condition extérieure de la liste suivante de conditions extérieures : température ambiante de l'au moins un actionneur, humidité de l'air dans un environnement de l'au moins un actionneur et état de charge d'un accumulateur d'énergie alimentant l'au moins un actionneur en énergie électrique.

10. Dispositif avec au moins un actionneur, un régulateur de force et un appareil de commande, dans lequel l'appareil de commande est configuré pour mettre à disposition d'un utilisateur du dispositif un retour haptique sur au moins un état de fonctionnement du dispositif au moyen d'une force à puissance prédéfinie et agissant par l'au moins un actionneur sur le régulateur de force, lorsque le régulateur de force est amené par l'utilisateur à au moins un point prédéfini sur une trajectoire du régulateur de force, et dans lequel l'appareil de commande est configuré en outre pour commander l'au moins un actionneur de sorte que dès que l'utilisateur dévie le régulateur de force pour un laps de temps prédéfini à l'au moins un point prédéfini sur la trajectoire du régulateur de force et/ou le maintient à ce point, la puissance de la force agissant par l'au moins un actionneur sur le régulateur de force est réduite après un autre laps de temps prédéfini.
